# EUROPEAN PATENT APPLICATION

(11) **EP 4 746 531 A1**
(43) Date of publication of application: **20.05.2026**
(21) Application number: 23944653.7
(22) Date of filing: 11.07.2023
(51) Int. Cl.: H04W 52/02

(54) **COMMUNICATION METHODS, STA DEVICES, AP DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/106831
(87) International publication number: WO 2025/010631

(57) **Abstract**

The embodiments of the present disclosure relate to the technical field of communications. Provided are communication methods, STA devices, an AP device, and a storage medium. A method comprises: a first station (STA) device determining a first radio frame, the first radio frame comprising first R-TWT information of at least one first AP device; and the first STA device sending the first radio frame to a second AP device, wherein a BSS of the first AP device and a BSS of the second AP device form an OBSS, and the first STA device is located in the OBSS. The embodiments of the present disclosure can provide the method for an STA device in an OBSS to send R-TWT information.

## Description

### TECHNICAL FIELD

The present disclosure relates to a field of communication technology, and more particularly, relates to a communication method, a STA device, an AP device, and a storage medium.

### BACKGROUND

Target Wake Time (TWT) is used for a station (STA) device and an access point (AP) device to communicate within a specific service period through negotiation and to remain in a sleep state at other times so as to save device power consumption. In order to ensure communication of low-latency services, IEEE 802.11be proposes a Restricted Target Wake Time (R-TWT) protocol, where within an R-TWT Service Period (SP), only communication identified as low-latency service communication is allowed, and other communication services are suspended or deferred during this phase.

At present, the R-TWT mechanism will be further studied, so as to ensure that low-latency service communication is free from interference.

### SUMMARY

Embodiments of the present disclosure provide a communication method, a STA device, an AP device, and a storage medium, to provide a manner in which a STA device reports R-TWT information of a plurality of AP devices.

In a first aspect, embodiments of the present disclosure provide a communication method, and the method includes:
a first station (STA) device determining a first frame, where the first frame includes first restricted target wake time (R-TWT) information of at least one first access point (AP) device;
the first STA device sending the first frame to a second AP device;
where a basic service set (BSS) of the first AP device and a BSS of the second AP device form an overlapping basic service set (OBSS), and the OBSS includes the first STA device.

In a second aspect, embodiments of the present disclosure provide a communication method, and the method includes:
a second AP device receiving a first frame sent by a first STA device, where each first frame includes first R-TWT information of at least one first AP device;
where a basic service set (BSS) of the first AP device and a BSS of the second AP device form an overlapping basic service set (OBSS), and the OBSS includes the first STA device.

In a third aspect, embodiments of the present disclosure provide a STA device, and the STA device includes:
a processing module, configured to determine a first frame, where the first frame includes first restricted target wake time (R-TWT) information of at least one first access point (AP) device;
a first transceiver module, configured to send the first frame to a second AP device;
where a basic service set (BSS) of the first AP device and a BSS of the second AP device form an overlapping basic service set (OBSS), and the OBSS includes the first STA device.

In a fourth aspect, embodiments of the present disclosure provide a STA device, including:
a second transceiver module, configured to receive a first frame sent by a first STA device, where each first frame includes first R-TWT information of at least one first AP device;
where a basic service set (BSS) of the first AP device and a BSS of the second AP device form an overlapping basic service set (OBSS), and the OBSS includes the first STA device.

In a fifth aspect, embodiments of the present disclosure provide a STA device, and the STA device includes one or a plurality of processors;
where the STA device is used for the communication method provided in the first aspect of the embodiments of the present disclosure.

In a sixth aspect, embodiments of the present disclosure provide an AP device, including one or a plurality of processors;
where the AP device is used for the communication method provided in the second aspect of the embodiments of the present disclosure.

In a seventh aspect, embodiments of the present disclosure provide a storage medium, the storage medium storing instructions, and when the instructions are executed on a communication device, the communication device is caused to perform the communication method provided in the first aspect or the second aspect of the embodiments of the present disclosure.

In an eighth aspect, embodiments of the present disclosure provide a communication system, the communication system including an AP device and a STA device; where the STA device is configured to perform the method as described in the first aspect, and the AP device is configured to perform the method as described in the second aspect.

Based on the communication method, the STA device, the AP device, and the storage medium provided by the embodiments of the present disclosure, a STA device in an OBSS may report, to an AP device, R-TWT information of another AP device that forms an OBSS with the AP device.

Additional aspects and advantages of the embodiments of the present disclosure will be set forth in part in the description below, and in part will become apparent from the description below, or will be learned by practice of the present disclosure.

### BRIEF DESCRIPTION OF THE DRAWINGS

In order to more clearly illustrate the technical solutions of the embodiments of the present disclosure, the drawings required to be used in the description of the embodiments of the present disclosure will be briefly introduced below. Apparently, the drawings in the following description are only some embodiments of the present disclosure, and for a person skilled in the art, other drawings may also be obtained based on these drawings without creative effort.
FIG. 1 is a schematic architectural diagram of a communication system according to embodiments of the present disclosure;
FIG. 2 is a schematic diagram of a network architecture provided according to embodiments of the present disclosure;
FIG. 3 is a schematic diagram illustrating a relationship of R-TWT SP provided by embodiments of the present disclosure;
FIG. 4a is an interaction schematic diagram of a communication method according to embodiments of the present disclosure;
FIG. 4b is another interaction schematic diagram of a communication method according to embodiments of the present disclosure;
FIG. 5 is a flow schematic diagram of a communication method according to embodiments of the present disclosure;
FIG. 6 is another flow schematic diagram of a communication method according to embodiments of the present disclosure;
FIG. 7 is a schematic structural diagram of a STA device provided according to embodiments of the present disclosure;
FIG. 8 is a schematic structural diagram of an AP device provided according to embodiments of the present disclosure;
FIG. 9 is a schematic structural diagram of a communication device provided according to embodiments of the present disclosure;
FIG. 10 is a schematic structural diagram of a chip provided according to embodiments of the present disclosure.

### DETAILED DESCRIPTION

Embodiments of the present disclosure provide a communication method, a STA device, an AP device, and a storage medium.

In a first aspect, embodiments of the present disclosure propose a communication method, and the method includes:
a first station (STA) device determining a first frame, where the first frame includes first restricted target wake time (R-TWT) information of at least one first access point (AP) device;
the first STA device sending the first frame to a second AP device;
where a basic service set (BSS) of the first AP device and a BSS of the second AP device form an overlapping basic service set (OBSS), and the OBSS includes the first STA device.

In the above embodiments, in a case where the BSS of the first AP device and the BSS of the second AP device form an OBSS, a STA device located within the OBSS may report, to the second AP device, R-TWT information of at least one first AP device, which is beneficial for the second AP device to quickly determine the R-TWT information of another first AP device that form the OBSS with the second AP device.

In combination with some embodiments of the first aspect, in some embodiments, the first frame includes a basic service set identifier present indication bit, and the basic service set identifier present indication bit indicates, by a first value, that the first frame includes first R-TWT information of at least one first AP device.

In the above embodiments, the first frame may indicate that the first frame includes first R-TWT information of at least one first AP device through the basic service set identifier present indication value, which enables the second AP device to quickly determine that the first frame includes first R-TWT information of at least one first AP device, thereby improving data processing efficiency of the second AP device.

In combination with some embodiments of the first aspect, in some embodiments, the first frame includes a target wake time element field, the target wake time element field includes a control field, and the control field includes the basic service set identifier present indication bit.

In the above embodiments, the first frame may reuse the control field of an existing target wake time element field to set the basic service set identifier present indication bit, which is beneficial for saving signaling resources.

In combination with some embodiments of the first aspect, in some embodiments, the first frame includes at least one broadcast target wake time parameter set field, and each broadcast target wake time parameter set field indicates, through a basic service set identifier field, a BSS corresponding to one first AP device.

In the above embodiments, the first frame may indicate the BSS of the first AP device through the basic service set identifier field of the broadcast target wake time parameter set field, which is beneficial for the second AP device to quickly determine the BSS corresponding to the first R-TWT in the first frame.

In combination with some embodiments of the first aspect, in some embodiments, the first frame includes a target wake time element field, the target wake time element field includes a target wake time parameter information field, and the target wake time parameter information field includes each broadcast target wake time parameter set field;
where each broadcast target wake time parameter set field further includes one piece of first R-TWT information.

In the above embodiments, the first frame may reuse the target wake time parameter information field of an existing target wake time element field to set the broadcast target wake time parameter set field, which is beneficial for saving signaling resources.

In combination with some embodiments of the first aspect, in some embodiments, the method further includes:
the first STA device receiving a second frame sent by the second AP device, where the second frame includes at least one of the following:
second R-TWT information allocated by the second AP device;
second R-TWT information allocated by the second AP device, and at least one first R-TWT information;
where a service period of the second R-TWT information does not overlap with a service period of each first R-TWT information.

In the above embodiments, the first STA device may determine, through the second frame, the second R-TWT information allocated thereto by the second AP device, or determine second R-TWT information allocated thereto by the second AP device and at least one first R-TWT information, thereby realizing rapid acquisition of the R-TWT information.

In combination with some embodiments of the first aspect, in some embodiments, the method further includes:
the first STA device sending a third frame to the second AP device, where the third frame is configured to request to become a scheduling member of the second R-TWT information.

In the above embodiments, the first STA device requests, through the third frame, to become the scheduling member of the second R-TWT information, thereby providing an implementation for the first STA device to request to become the scheduling member of the second R-TWT information after acquiring the second R-TWT information, and improving R-TWT-related mechanisms.

In combination with some embodiments of the first aspect, in some embodiments, the method further includes:
the first STA device receiving a fourth frame sent by the second AP device, where the fourth frame is configured to indicate allowing or rejecting the first STA device to become the scheduling member of the second R-TWT information.

In the above embodiments, the second AP device indicates, through the fourth frame, whether to allow the first STA device to become the scheduling member of the second R-TWT information, thereby providing the second AP device with a response manner for a request to join the R-TWT information, and improving the R-TWT-related mechanism.

In combination with some embodiments of the first aspect, in some embodiments, the method further includes:
after the first STA device becomes the scheduling member of the second R-TWT information, the first STA device performing low-latency service transmission with the second AP device within a service period of the second R-TWT information.

In combination with some embodiments of the first aspect, in some embodiments, the third frame and the fourth frame are target wake time setup frames;
the target wake time setup frame includes a first indication field, when an indication value of the first indication field is a second value, the target wake time setup frame is configured to request to become the scheduling member of the second R-TWT information; and when the indication value of the first indication field is a third value, the target wake time setup frame is configured to indicate allowing or rejecting the first STA device to become the scheduling member of the second R-TWT information.

In the above embodiments, the third frame and the fourth frame may reuse the existing target wake time setup frame, and distinguish the third frame and the fourth frame through different indication values of the first indication field, which is beneficial for saving signaling resources and improving convenience of signaling transmission.

In combination with some embodiments of the first aspect, in some embodiments, the first R-TWT information and the second R-TWT information include at least one of a start time, a service duration, or a service interval.

In a second aspect, embodiments of the present disclosure propose a communication method, and the method includes:
a second AP device receiving a first frame sent by a first STA device, where each first frame includes first R-TWT information of at least one first AP device;
where a basic service set (BSS) of the first AP device and a BSS of the second AP device form an overlapping basic service set (OBSS), and the OBSS includes the first STA device.

In the above embodiments, in a case where the BSS of the first AP device and the BSS of the second AP device form an OBSS, the second AP device may receive the R-TWT information of at least one first AP device reported by a STA device located within the OBSS, which is beneficial for the second AP device to quickly determine the R-TWT information of another first AP device that forms an OBSS with the second AP device.

In combination with some embodiments of the second aspect, in some embodiments, the first frame includes a basic service set identifier present indication bit, and the basic service set identifier present indication bit indicates, by a first value, that the first frame includes first R-TWT information of at least one first AP device.

In the above embodiments, the first frame may indicate that the first frame includes first R-TWT information of at least one first AP device through the basic service set identifier present indication value, which enables the second AP device to quickly determine that the first frame includes first R-TWT information of at least one first AP device, thereby improving data processing efficiency of the second AP device.

In combination with some embodiments of the second aspect, in some embodiments, the first frame includes a target wake time element field, the target wake time element field includes a control field, and the control field includes the basic service set identifier present indication bit.

In the above embodiments, the first frame may reuse the control field of the existing target wake time element field to set the basic service set identifier present indication bit, which is beneficial for saving signaling resources.

In combination with some embodiments of the second aspect, in some embodiments, the first frame includes at least one broadcast target wake time parameter set field, and each broadcast target wake time parameter set field indicates, through a basic service set identifier field, a BSS corresponding to one first AP device.

In the above embodiments, the first frame may indicate the BSS of the first AP device through the basic service set identifier field of the broadcast target wake time parameter set field, which is beneficial for the second AP device to quickly determine the BSS corresponding to the first R-TWT in the first frame.

In combination with some embodiments of the second aspect, in some embodiments, the first frame includes a target wake time element field, the target wake time element field includes a target wake time parameter information field, and the target wake time parameter information field includes each broadcast target wake time parameter set field;
where each broadcast target wake time parameter set field further includes one piece of first R-TWT information.

In the above embodiments, the first frame may reuse the target wake time parameter information field of an existing target wake time element field to set the broadcast target wake time parameter set field, which is beneficial for saving signaling resources.

In combination with some embodiments of the second aspect, in some embodiments, the method further includes:
the second AP device sending a second frame to the first STA device, where the second frame includes at least one of the following:
second R-TWT information allocated to the first STA device; or
second R-TWT information allocated to the first STA device, and at least one first R-TWT information;
where a service period of the second R-TWT information does not overlap with a service period of each first R-TWT information.

In the above embodiments, the second AP device may indicate, through the second frame, second R-TWT information allocated to the first STA device, or indicate second R-TWT information allocated to the first STA device and at least one first R-TWT information, which is beneficial for the first STA device to quickly acquire the R-TWT information.

In combination with some embodiments of the second aspect, in some embodiments, the method further includes:
the second AP device receiving a third frame sent by the first STA device, where the third frame is configured to request to become a scheduling member of the second R-TWT information.

In the above embodiments, the first STA device requests, through the third frame, to become the scheduling member of the second R-TWT information, thereby providing an implementation manner for the first STA device to request to become the scheduling member of the second R-TWT information after acquiring the second R-TWT information, and improving R-TWT-related mechanism.

In combination with some embodiments of the second aspect, in some embodiments, the method further includes:
the second AP device sending a fourth frame to the first STA device, where the fourth frame indicates allowing or rejecting the first STA device to become the scheduling member of the second R-TWT information.

In the above embodiments, the second AP device indicates, through the fourth frame, whether to allow the first STA device to become the scheduling member of the second R-TWT information, thereby providing the second AP device with a response manner for a request to join the R-TWT information, and improving the R-TWT-related mechanism.

In combination with some embodiments of the second aspect, in some embodiments, the method further includes:
after the first STA device becomes the scheduling member of the second R-TWT information, the second AP device performing low-latency service transmission with the first STA device within the service period of the second R-TWT information.

In combination with some embodiments of the second aspect, in some embodiments, the third frame and the fourth frame are target wake time setup frames;
the target wake time setup frame includes a first indication field, when an indication value of the first indication field is a second value, the target wake time setup frame is configured to request to become the scheduling member of the second R-TWT information; and when the indication value of the first indication field is a third value, the target wake time setup frame is configured to indicate allowing or rejecting the first STA device to become the scheduling member of the second R-TWT information.

In the above embodiments, the third frame and the fourth frame may reuse the existing target wake time setup frame, and distinguish the third frame and the fourth frame through different indication values of the first indication field, which is beneficial for saving signaling resources and improving convenience of signaling transmission.

The first R-TWT information and the second R-TWT information include at least one of a start time, a service duration, or a service interval.

In a third aspect, embodiments of the present disclosure propose a STA device, including:
a processing module, configured to determine a first frame, where the first frame includes first restricted target wake time (R-TWT) information of at least one first access point (AP) device;
a first transceiver module, configured to send the first frame to a second AP device;
where a basic service set (BSS) of the first AP device and a BSS of the second AP device form an overlapping basic service set (OBSS), and the OBSS includes the first STA device.

In a fourth aspect, embodiments of the present disclosure propose an AP device, including:
where a processing module, configured to determine a first frame, where the first frame includes first restricted target wake time (R-TWT) information of at least one first access point (AP) device;
a first transceiver module, configured to send the first frame to a second AP device;
where a basic service set (BSS) of the first AP device and a BSS of the second AP device form an overlapping basic service set (OBSS), and the OBSS includes the first STA device.

In a fifth aspect, embodiments of the present disclosure propose a STA device, the STA device including: one or a plurality of processors; where the STA device is configured to execute the first aspect and optional implementations of the first aspect.

In a sixth aspect, embodiments of the present disclosure propose an AP device, the AP device including: one or a plurality of processors; where the AP device is configured to execute the second aspect and optional implementations of the second aspect.

In a seventh aspect, embodiments of the present disclosure propose a communication system, the communication system including an AP device and a STA device; where the STA device is configured to execute the method as described in the first aspect and optional implementations of the first aspect, and the AP device is configured to execute the method as described in the second aspect and optional implementations of the second aspect.

In an eighth aspect, embodiments of the present disclosure propose a storage medium, the storage medium storing instructions, and when the instructions are executed on a communication device, the communication device is caused to execute the method as described in the first aspect and the second aspect, and optional implementations of the first aspect and the second aspect.

In a ninth aspect, embodiments of the present disclosure propose a program product, and when the program product is executed by a communication device, the communication device is caused to execute the method as described in the first aspect and the second aspect, and optional implementations of the first aspect and the second aspect.

In a tenth aspect, embodiments of the present disclosure propose a computer program, and when the computer program is run on a computer, the computer is caused to execute the method as described in the first aspect and the second aspect, and optional implementations of the first aspect and the second aspect.

In an eleventh aspect, embodiments of the present disclosure provide a chip or a chip system. The chip or the chip system includes a processing circuit, and is configured to execute the method as described according to the first aspect and the second aspect, and optional implementations of the first aspect and the second aspect.

It may be understood that the above communication apparatus, AP device, STA device, communication system, storage medium, program product, computer program, chip or chip system are all configured to execute the method proposed by the embodiments of the present disclosure. Therefore, the beneficial effects that may be achieved thereby may refer to the beneficial effects in the corresponding method, and details are not repeated herein.

Embodiments of the present disclosure propose a communication method, a STA device, an AP device, and a storage medium. In some embodiments, terms such as communication method and information processing method, communication method, and the like may be used interchangeably, terms such as communication apparatus and information processing apparatus may be used interchangeably, and terms such as information processing system and communication system may be used interchangeably.

The embodiments of the present disclosure are not exhaustive and are merely illustrative of some embodiments, and do not constitute a specific limitation on the protection scope of the present disclosure. In the absence of contradiction, each step in one embodiment may be implemented as an independent embodiment, and the steps may be arbitrarily combined. For example, a solution obtained by removing some steps in one embodiment may also be implemented as an independent embodiment, and the order of the steps in one embodiment may be arbitrarily exchanged. In addition, optional implementations in one embodiment may be arbitrarily combined; moreover, different embodiments may be arbitrarily combined. For example, some or all steps of different embodiments may be arbitrarily combined, and one embodiment may be arbitrarily combined with optional implementations of other embodiments.

In the embodiments of the present disclosure, in the absence of special description and logical conflict, terms and/or descriptions among the embodiments are consistent and may be mutually referenced, and technical features in different embodiments may be combined according to their inherent logical relationships to form new embodiments.

The terms used in the embodiments of the present disclosure are only for the purpose of describing specific embodiments, and are not intended to limit the present disclosure.

In the embodiments of the present disclosure, unless otherwise specified, elements expressed in the singular form, such as "one", "a/an", "the", "above", "said", "the foregoing", "this", and the like, may indicate "one and only one", and may also indicate "one or a plurality of", "at least one", and the like. For example, when articles such as "a", "an", and "the" in English are used in translation, the noun following the article may be understood as being expressed in the singular form, or may be understood as being expressed in the plural form.

In the embodiments of the present disclosure, "a plurality of" refers to two or more.

In some embodiments, terms such as "at least one of (at least one item, at least one)", "one or more", "a plurality of", and "multiple" may be used interchangeably.

In some embodiments, expressions such as "at least one of A and B", "A and/or B", "in one case A and in another case B", and "in response to one case A and in response to another case B" may, depending on the circumstances, include the following technical solutions: in some embodiments, A (A is performed independently of B); in some embodiments, B (B is performed independently of A); in some embodiments, selection from A and B (A and B are selectively performed); and in some embodiments, A and B (both A and B are performed). The same applies when there are more branches such as A, B, and C.

In some embodiments, expressions such as "A or B" may, depending on the circumstances, include the following technical solutions: in some embodiments, A (A is performed independently of B); in some embodiments, B (B is performed independently of A); and in some embodiments, selection from A and B (A and B are selectively performed). The same applies when there are more branches such as A, B, and C.

The prefixes such as "first" and "second" in the embodiments of the present disclosure are merely used to distinguish different described objects, and do not constitute limitations on the position, order, priority, quantity, or content of the described objects. Statements regarding the described objects shall refer to the descriptions in the claims or the context of the embodiments, and no redundant limitation shall be constituted due to the use of such prefixes. For example, when the described object is a "field", the ordinal numerals before "field" in "first field" and "second field" do not limit the positions or order between the "fields"; "first" and "second" do not limit whether the "fields" they modify are in the same message, nor do they limit the sequential order of the "first field" and the "second field". As another example, when the described object is a "level", the ordinal numerals before "level" in "first level" and "second level" do not limit the priority between the "levels". As another example, the quantity of the described object is not limited by the ordinal numerals, and may be one or more; taking a "first device" as an example, the quantity of the "device" may be one or more. In addition, objects modified by different prefixes may be the same or different; for example, when the described object is a "device", the "first device" and the "second device" may be the same device or different devices, and their types may be the same or different; as another example, when the described object is "information", the "first information" and the "second information" may be the same information or different information, and their contents may be the same or different.

In some embodiments, expressions such as "including A", "containing A", "configured to indicate A", and "carrying A" may be interpreted as directly carrying A, or may be interpreted as indirectly indicating A.

In some embodiments, terms such as "in response to ...", "in response to determining ...", "in a case that ...", "upon that ...", "when ...", "if ...", and "provided that ..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably, and terms such as "less than", "less than or equal to", "not greater than", "fewer than", "fewer than or equal to", "no more than", "lower than", "lower than or equal to", "not higher than", and "below" may be used interchangeably.

In some embodiments, acquisition of data, information, and the like may comply with the laws and regulations of the country where the acquisition is performed.

In some embodiments, data, information, and the like may be acquired after obtaining user consent.

In addition, each element, each row, or each column in the tables of the embodiments of the present disclosure may be implemented as an independent embodiment, and any combination of any elements, any rows, or any columns may also be implemented as an independent embodiment.

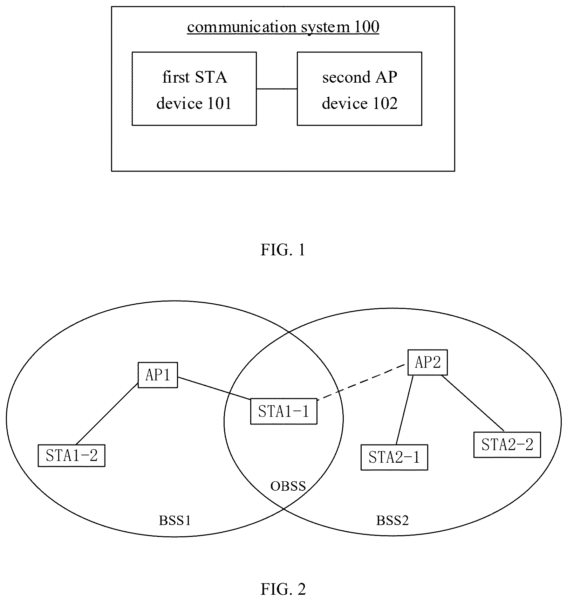

FIG. 1 is a schematic architectural diagram of a communication system according to embodiments of the present disclosure.

As shown in FIG. 1, the communication system 100 includes a first station (STA) device 101 and a second access point (AP) device 102.

In some embodiments, the first STA device 101 may be a device including a wireless communication chip supporting WiFi communication functions, a wireless sensor, or a wireless communication terminal. Optionally, the wireless communication terminal may be, for example, at least one of a mobile phone, a wearable device, an Internet of Things device supporting WiFi communication functions, a vehicle with WiFi communication functions, a smart vehicle, a tablet computer (Pad), a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home, but is not limited thereto.

Specifically, the first STA device 101 may be a terminal device or a network device with a wireless fidelity (WiFi) chip. Optionally, the first STA device 101 may support multiple WLAN standards such as 802.11ax, 802.11be, 802.11ac, 802.11n, 802.11g, 802.11b, and 802.11a, and may also support the next-generation 802.11 protocol, but is not limited thereto.

In some embodiments, the second AP device 102 may be an access point through which a mobile terminal accesses a wired network. An AP is equivalent to a bridge connecting a wired network and a wireless network, and its main function is to connect various wireless network clients together and then connect the wireless network to an Ethernet. Specifically, the second AP device 102 may be a terminal device or a network device with a wireless fidelity chip. Optionally, the second AP device may support multiple WLAN standards such as 802.11ax, 802.11be, 802.11ac, 802.11n, 802.11g, 802.11b, and 802.11a, and may also support the next-generation 802.11 protocol, but is not limited thereto.

Optionally, in the embodiments of the present disclosure, the AP and the STA may be devices supporting multi-link, for example, which may be respectively represented as an access point device supporting multi-link (Access Point Multi-Link Device, AP MLD) and a station device supporting multi-link (Non-Access Point Multi-Link Device, Non-AP MLD); the AP MLD may represent an access point supporting a multi-link communication function, and the non-AP MLD may represent a station supporting a multi-link communication function.

It should be understood that the communication system described in embodiments of the present disclosure is intended to more clearly illustrate the technical solutions of embodiments of the present disclosure, and does not constitute a limitation on the technical solutions proposed in embodiments of the present disclosure. Those skilled in the art knows that, with the evolution of system architectures and the emergence of new service scenarios, the technical solutions proposed in embodiments of the present disclosure are also applicable to similar technical problems.

The embodiments of the present disclosure described below may be applied to the communication system 100 shown in FIG. 1, or to some of the entities thereof, but are not limited thereto. The entities shown in FIG. 1 are illustrative. The communication system may include all or some of the entities in FIG. 1, or may include other entities not shown in FIG. 1. The number and forms of the entities are arbitrary. The entities may be physical entities or virtual entities. The connection relationships among the entities are illustrative. The entities may be connected or not connected. The connections may be in any manner, may be direct connections or indirect connections, and may be wired connections or wireless connections.

The embodiments of the present disclosure may be applied to a wireless local area network (WLAN), for example, may be applicable to IEEE 802.11 system standards, such as the 802.11a/b/g standard, the 802.11n standard, the 802.11ac standard, the 802.11ax standard, or a next-generation standard thereof, for example, the 802.11be standard, also referred to as Wi-Fi 7 or an extremely high-throughput (extremely high-throughput, EHT) standard, or a further next-generation standard. Alternatively, the embodiments of the present disclosure may also be applicable to wireless local area network systems such as an Internet of Things (internet of things, IoT) network or a Vehicle to X (V2X) network. Of course, the embodiments of the present disclosure may also be applicable to another possible communication system, for example, a Long Term Evolution (LTE) system, an LTE frequency division duplex (FDD) system, an LTE time division duplex (TDD) system, a Universal Mobile Telecommunication System (UMTS), a Worldwide Interoperability for Microwave Access (WiMAX) communication system, and a future fifth generation (5th generation, 5G) communication system, and the like.

In a WLAN, a Basic Service Set (Basic Service Set, BSS) is a basic constituent part of a WLAN. A BSS network is composed of devices having a certain association within a specific coverage area. One association scenario is that STA devices directly communicate with each other in an ad hoc network, which is referred to as an Independent BSS (IBSS, Independent Basic Service Set). Another more common scenario is that there is only one central station having dedicated management of the BSS in the BSS network, which is referred to as an AP device, and the BSS network includes at least one STA device associated with the AP device.

The Target Wake Time (TWT) is used for the AP device and the STA device within a BSS to communicate within a specific service time through negotiation and remain in a sleep state at other times to save device power consumption. In order to ensure communication of low-latency services, 802.11be proposes a Restricted Target Wake Time (R-TWT) protocol, where only communication identified as low-latency service is allowed within an R-TWT service period (SP), and other communication services are suspended or deferred during this period.

However, the currently established R-TWT mechanism is only applicable to devices (AP devices and STA devices) within a single BSS. With diversified communication service requirements and the development trend toward high-frequency bands, WLAN device deployment is becoming increasingly dense, and the phenomenon of overlapping basic service sets (Overlapping BSS, OBSS) is becoming increasingly common. As shown in FIG. 2, FIG. 2 is a schematic diagram of a network architecture provided by an embodiment of the present disclosure. In FIG. 2, the basic service set corresponding to AP1 is BSS1, and the basic service set corresponding to AP2 is BSS2. AP1 may establish associations with STA1-1 and STA1-2 in BSS1 and perform communication, and AP2 may establish associations with STA2-1 and STA2-2 in BSS2 and perform communication. STA1-1 is located in an OBSS formed by BSS1 and BSS2, and STA1-1 may be interfered by AP2 when communicating with AP1.

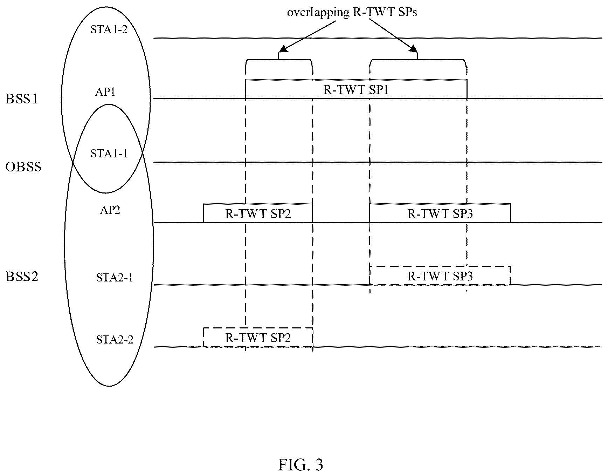

The R-TWT mechanism may effectively ensure priority transmission of the low-latency service within a BSS, but the R-TWT SPs in respective BSSs are independent of each other. In an OBSS scenario, when the R-TWT service periods SPs of different BSSs conflict, the low-latency service transmission of STA devices located in the OBSS is interfered. As shown in FIG. 3, the R-TWT SP corresponding to BSS1 is R-TWT SP1, and the R-TWT SPs corresponding to BSS2 are R-TWT SP2 and R-TWT SP3, and both R-TWT SP2 and R-TWT SP3 have overlapping portions with the R-TWT SP1 (overlapping R-TWT SPs). For STA1-1 located in the OBSS, when STA1-1 performs low-latency service transmission with its associated AP device within the overlapping R-TWT SP, the STA1-1 is interfered by another AP device.

Accordingly, in order to improve the above-described indication mechanism of the sleep period, the technical solutions in the embodiments of the present disclosure will be further clearly and completely described below in combination with the accompanying drawings. Obviously, the described embodiments are only some of the embodiments of the present disclosure, rather than all embodiments. Based on the embodiments of the present disclosure, all other embodiments obtained by those skilled in the art without creative effort shall fall within the protection scope of the present disclosure.

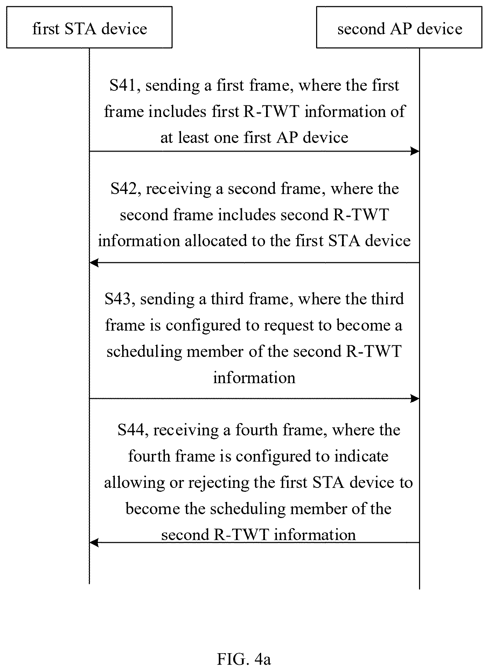

FIG. 4a is one interaction schematic diagram of a communication method according to embodiments of the present disclosure. As shown in FIG. 4a, the method includes:
step S41, a first STA device sends a first frame to a second AP device, and the first frame includes first R-TWT information of at least one first AP device.

In the embodiments of the present disclosure, the first STA device is located within an overlapping basic service set (OBSS) formed by a BSS of the second AP device and a BSS of at least one first AP device. The second AP device is an AP device with which the first STA device expects to establish association and perform communication.

In the embodiments of the present disclosure, the first frame may be an association request frame or a re-association request frame.

In the embodiments of the present disclosure, the first frame includes first R-TWT information of at least one first AP device.
the first STA device may obtain the R-TWT information of the first AP device through a broadcast frame (such as a beacon frame) sent by each first AP device.

The first R-TWT information included in the first frame is R-TWT information of an AP device that forms an OBSS with the second AP device.

In the embodiments of the present disclosure, the BSS of the first AP device and the BSS of the second AP device form an overlapping basic service set (OBSS), and the first STA device is located within the OBSS.

As an example, in a case where the first STA device is located within an OBSS formed by the second AP device and at least one first AP device, when the first STA device expects to establish association with the second AP device, the first STA device may determine an association request frame, and the association request frame is configured to request to establish association with the second AP device. The association request frame includes first R-TWT information of at least one other AP device (first AP device), other than the second AP device, received by the first STA device.

As an example, in a case where the first STA device is located within an OBSS formed by the second AP device and at least one first AP device, when the first STA device expects to reestablish association with the second AP device, the first STA device may determine a re-association request frame, and the re-association request frame is configured to request to reestablish association with the second AP device. The re-association request frame includes first R-TWT information of at least one other AP device (first AP device), other than the second AP device, received by the first STA device.

In the embodiments of the present disclosure, the first frame includes a basic service set identifier present (BSSID Present) indication bit, and when an indication value of the basic service set identifier present indication bit is a first value, the indication bit is configured to indicate that the first frame includes first R-TWT information of at least one first AP device.

When the indication value of the basic service set identifier present indication bit is the first value, it indicates that there exists at least one first AP device whose BSS forms an OBSS with the BSS of the second AP device, and that the first STA device is located within the OBSS.

The first value may be 1, or may be another value, which is not limited herein.

In a case where the first STA device does not receive the first R-TWT information of another AP device (the first AP device) before determining the first frame, an indication value of the basic service set identifier present indication bit of the first frame is a value other than the first value (for example, 0) or is empty, and is configured to indicate that the first frame does not include first R-TWT information of the first AP device.

Optionally, the first frame includes a Control field (Control Subfield), and the control field includes the basic service set identifier present indication bit.

As an example, a specific format of the control field may be as follows:

| | NDP Paging Indicator | Responder PM Mode | Negotiation Type | TWT Information Frame Disabled | Wake Duration Unit | BSSID Present | Reserved |
|---|---|---|---|---|---|---|---|
| Bits: | 1 | 1 | 2 | 1 | 1 | 1 | 1 |

where a BSSID Present field is the basic service set identifier present indication bit.

Optionally, the first frame includes a target wake time element (TWT element) field, the target wake time element field includes the control subfield, and the control subfield includes the basic service set identifier present indication bit.

In the embodiments of the present disclosure, the first frame includes at least one broadcast target wake time parameter set (Broadcast TWT Parameter Set) field, and each broadcast target wake time parameter set field includes a basic service set identifier (BSSID) field, and the basic service set identifier field is configured to indicate a BSS corresponding to one first AP device.

Optionally, the basic service set identifier field in each broadcast target wake time parameter set field may include identifier information of the BSS corresponding to the first AP device, such as a BSSID, and the like.

Optionally, the basic service set identifier field in each broadcast target wake time parameter set field may include a MAC address of the first AP device, a device identifier, and other related information that may be used to uniquely identify the first AP device, so as to indirectly indicate the BSS corresponding to the first AP device.

In the embodiments of the present disclosure, the first frame includes a target wake time parameter information (TWT Parameter Information) field, and the target wake time parameter information field includes at least one broadcast target wake time parameter set (Broadcast TWT Parameter Set) field.

Optionally, the first frame includes a target wake time element (TWT element) field and a target wake time parameter information (TWT Parameter Information) field, and the target wake time parameter information field includes at least one broadcast target wake time parameter set (Broadcast TWT Parameter Set) field.

Optionally, each broadcast target wake time parameter set field further includes first R-TWT information of one first AP device.

Each broadcast target wake time parameter set field may further indicate, through the basic service set identifier field, that the first R-TWT information included in the broadcast target wake time parameter set field is first R-TWT information corresponding to the BSS indicated by the basic service set identifier field.

Optionally, any R-TWT information includes at least one of a start time, a service duration, or a service interval.

As an example, a specific format of the broadcast target wake time parameter set field may be as follows:

| | Request Type | Target Wake Time | Nominal Minimum TWT Wake Duration | TWT Wake Interval Mantissa | Broadcast TWT Info | Restricted TWT Traffic Info (optional) | BSSID |
|---|---|---|---|---|---|---|---|
| Octets | 2 | 2 | 1 | 2 | 2 | 0 or 3 | 6 |

The broadcast target wake time parameter set field may include a request type field, a target wake time field, a nominal minimum TWT wake duration field, a TWT wake interval mantissa field, a broadcast TWT information (Broadcast TWT Info) field, and a restricted target wake time traffic information (Restricted TWT Traffic Info) field. The Target Wake Time field is configured to indicate a start time of corresponding R-TWT information; the Nominal Minimum TWT Wake Duration field is configured to indicate a service lasting time of the corresponding R-TWT information, that is, a service duration; and the TWT Wake Interval Mantissa field is configured to indicate a service interval of the corresponding R-TWT information.

In the embodiments of the present disclosure, after determining the first frame, the first STA device may send the first frame to the second AP device.

Step S42, the first STA device receives a second frame sent by the second AP device, and the second frame includes second R-TWT information allocated to the first STA device.

In the embodiments of the present disclosure, the second frame includes second R-TWT information allocated to the first STA device by the second AP device.

Optionally, the second frame includes second R-TWT information allocated to the first STA device by the second AP device, and at least one first R-TWT information.

That is, in addition to including the second R-TWT information allocated to the first STA device by the second AP device, the second frame further includes first R-TWT information of at least one first AP device reported by the first STA device.

Optionally, the second frame may further include R-TWT information of another AP device received by the second AP device from another AP device.

As an example, the second frame includes second R-TWT information of the second AP device, and the R-TWT information of an AP device corresponding to another BSS that forms an OBSS with the BSS of the second AP device.

In the embodiments of the present disclosure, after receiving the first frame sent by the first STA device, the second AP device may determine a basic service set identifier present indication bit in the first frame.

When an indication value of the basic service set identifier present indication bit in the first frame is the first value, that is, when the basic service set identifier present indication bit is configured to indicate that the first frame includes first R-TWT information of at least one first AP device, the second AP device may determine that the first STA device obtains the first R-TWT information from at least one first AP device, and may also determine that the first STA device is located within the OBSS formed by the BSS of the second AP device and the BSS of at least one first AP device, and the second AP device may obtain first R-TWT information of each first AP device from the first frame.

When an indication value of the basic service set identifier present indication bit in the first frame is not the first value, the second AP device may determine that the first STA device does not obtain first R-TWT information from another first AP device.

Optionally, in a case where the first frame includes at least one broadcast target wake time parameter set field, and each broadcast target wake time parameter set field indicates a BSS corresponding to a first AP device through a basic service set identifier, the second AP device may obtain the corresponding first R-TWT information from the corresponding first AP device.

Optionally, the second AP device may obtain first R-TWT information of each first AP device from each broadcast target wake time parameter set field in the first frame.

In the embodiments of the present disclosure, after receiving the first frame, the second AP device may determine second R-TWT information allocated to the first STA device according to the first frame.

When the second AP device determines that the first STA device does not obtain the first R-TWT information from another first AP device, the second AP device may determine original R-TWT information as second R-TWT information allocated to the first STA device.

When the second AP device determines that the first STA device obtains the first R-TWT information of at least one first AP device from another first AP device, the second AP device may determine second R-TWT information allocated to the first STA device based on first R-TWT information of each first AP device.

A service period of the second R-TWT information does not overlap with a service period of each first R-TWT information.

Optionally, when the second AP device determines that the first STA device obtains the first R-TWT information of at least one first AP device from another first AP device, the second AP device may adjust the original R-TWT information by using one or more of the following manner: shortening or extending a service period, changing a start time, shortening or extending a service interval, and the like, so as to obtain the second R-TWT information allocated to the first STA device.

The original R-TWT information of the second AP device is R-TWT information adopted by the second AP device before receiving the first frame.

In the embodiments of the present disclosure, the second frame may be an association response frame, a re-association response (Reassociation Response) frame, or a beacon frame.

In the embodiments of the present disclosure, the second frame includes a target wake time parameter information (TWT Parameter Information) field, and the target wake time parameter information field includes at least one broadcast target wake time parameter set (Broadcast TWT Parameter Set) field, and each broadcast target wake time parameter set field includes second R-TWT information or R-TWT information of another AP device.

Optionally, the second frame includes a target wake time element (TWT element) field and a target wake time parameter information (TWT Parameter Information) field, and the target wake time parameter information field includes a broadcast target wake time parameter set (Broadcast TWT Parameter Set) field, and each broadcast target wake time parameter set field includes second R-TWT information or R-TWT information of another AP device.

Step S43, the first STA device sends a third frame to the second AP device, and the third frame is configured to request to become a scheduling member of the second R-TWT information.

In the embodiments of the present disclosure, after receiving the second frame, the first STA device may determine the third frame and send the third frame to the second AP device.

For example, after the first STA device establishes association or reestablishes association with the second AP device, the first STA device may determine the third frame and send the third frame to the second AP device.

The third frame is configured to request to become the scheduling member of the second R-TWT information, that is, is configured to request to perform low-latency service transmission with the second AP device within a service period of the second R-TWT information of the second AP device.

In the embodiments of the present disclosure, the third frame is a target wake time setup (TWT Setup) frame.

The third frame includes a first indication field, and an indication value of the first indication field is a second value, and is used to indicate that the third frame is configured to perform a TWT setup request, that is, is configured to indicate requesting to become the scheduling member of the second R-TWT information of the second AP device.

The first indication field may be a target wake time request (TWT Request) field in the third frame, or may be another information field in the third frame or at least one reserved bit, which is not limited herein.

The second value may be 1, which is not limited herein.

Step S44, the first STA device receives a fourth frame, and the fourth frame is configured to indicate allowing or rejecting the first STA device to become the scheduling member of the second R-TWT information.

The fourth frame is sent by the second AP device to the first STA device after the second AP device receives the third frame, and is configured to respond to the third frame.

That is, after the first STA device sends the third frame to the second AP device, the first STA device may receive the fourth frame sent by the second AP device.

The fourth frame is configured to indicate allowing or rejecting the first STA device to become the scheduling member of the second R-TWT information, that is, is configured to indicate allowing or rejecting the first STA device to join the second R-TWT information, so as to perform the low-latency service transmission with the second AP device within the service period of the second R-TWT information.

In the embodiments of the present disclosure, the fourth frame is a target wake time setup frame.

The fourth frame includes a first indication field, and an indication value of the first indication field is a third value, and is configured to indicate that the fourth frame is configured to respond to the third frame, that is, to respond to a joining request of the first STA device.

The first indication field may be a target wake time request (TWT Request) field in the fourth frame, or may be another information field in the third frame or at least one reserved bit, which is not limited herein.

The third value is different from the second value, for example, the third value may be 0, which is not limited herein.

In the embodiments of the present disclosure, after the first STA device becomes the scheduling member of the second R-TWT information, the first STA device and the second AP device may perform the low-latency service transmission within the service period of the second R-TWT information.

In some embodiments, the determination or judgment may be performed through a value (0 or 1) represented by 1 bit, or may be performed through a true or false value (a Boolean value) represented by true or false, or may be performed through numerical comparison (for example, comparison with a predetermined value), but is not limited thereto.

The communication method involved in the embodiments of the present disclosure may include the foregoing steps and at least one of the embodiments. For example, any one of Step S41 to Step S44 may be implemented as an independent embodiment, and any combination of two or more of Step S41 to Step S44 may be implemented as an independent embodiment, but is not limited thereto.

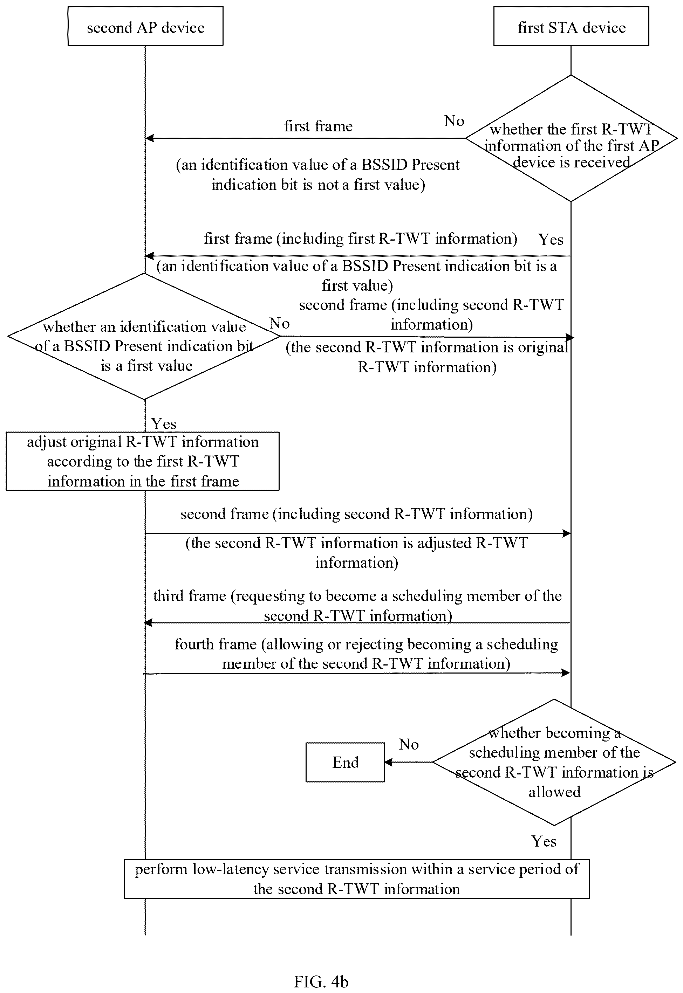

FIG. 4b is another flow schematic diagram of a communication method according to embodiments of the present disclosure.

In FIG. 4b, a BSS of the second AP device and a BSS of at least one first AP device form an OBSS, and the first STA device is located within the OBSS.

### Step 1:

For the first STA device, when the first STA device expects to establish association with the second AP device, the first STA device may send a first frame to the second AP device. For example, the first STA device may send an association request frame or a re-association request frame to the second AP device.

If the first STA device has previously received the first R-TWT information of the first AP device, the first frame includes the received first R-TWT information, and an indication value of a basic service set identifier present (BSSID Present) indication bit in the first frame is set to a first value, which is configured to indicate that the first frame includes first R-TWT information of at least one first AP device.

If the first STA device has not previously received the first R-TWT information of the first AP device, the first frame does not include the first R-TWT information, and the indication value of the BSSID Present indication bit is not the first value, which is configured to indicate that the first frame does not include the R-TWT information of any AP device.

The first frame includes a target wake time element (TWT element) field, the target wake time element field includes a control field, and the control field includes the BSSID Present indication bit.

The first frame includes a target wake time element (TWT element) field and a target wake time parameter information (TWT Parameter Information) field, and the target wake time parameter information field includes at least one broadcast target wake time parameter set (Broadcast TWT Parameter Set) field. Each broadcast target wake time parameter set field includes a basic service set identifier (BSSID) field, and is configured to indicate a BSS corresponding to one first AP device. Each broadcast target wake time parameter set field further includes first R-TWT information of a corresponding first AP device.

Step 2: For the second AP device, after receiving the first frame, the second AP device determines whether an indication value of the BSSID Present indication bit in the first frame is the first value.

If the indication value of the BSSID Present indication bit is not the first value, a second frame is sent to the first STA device, and the second frame includes second R-TWT information allocated to the first STA device, and the second R-TWT information is original R-TWT information of the second AP device.

If the indication value of the BSSID Present indication bit is the first value, the original R-TWT information is adjusted according to the first R-TWT information in the first frame, such that the adjusted R-TWT information does not overlap with each first R-TWT information. Further, a second frame is sent to the first STA device, and the second frame includes second R-TWT information, and the second R-TWT information is the adjusted R-TWT information.

The second frame may be a re-association response frame, an association response frame, or a beacon frame.

Step 3: If the first STA device expects to perform low-latency service transmission with the second AP device, the first STA device sends a third frame to the second AP device, and the third frame, which is configured to request to become a scheduling member of the second R-TWT information.

The third frame is a target wake time setup (TWT Setup) frame, and the third frame indicates that the third frame is configured to perform a TWT setup request by setting an indication value of the target wake time request (TWT Request) field to a second value, that is, is configured to indicate requesting to become the scheduling member of the second R-TWT information.

Step 4: After receiving the third frame, the second AP device may send a fourth frame to the first STA device, so as to respond to the third frame.

The fourth frame is configured to indicate allowing or rejecting the first STA device to become a scheduling member of the second R-TWT information.

The fourth frame is a target wake time setup (TWT Setup) frame, and the fourth frame indicates that the fourth frame is configured to perform a TWT setup response by setting an indication value of a target wake time request (TWT Request) field to a third value, that is, is configured to indicate allowing or rejecting the first STA device to become the scheduling member of the second R-TWT information.

### Step 5:

For the first STA device, after receiving the fourth frame, if the second AP device rejects the first STA device to become the scheduling member of the second R-TWT information, the first STA device cannot perform the low-latency service transmission with the second AP device, and may stop interaction with the second AP device.

If the second AP device allows the first STA device to become the scheduling member of the second R-TWT information, in a case where the first STA device and the second AP device have established association, the first STA device and the second AP device may perform the low-latency service transmission within the service period of the second R-TWT information.

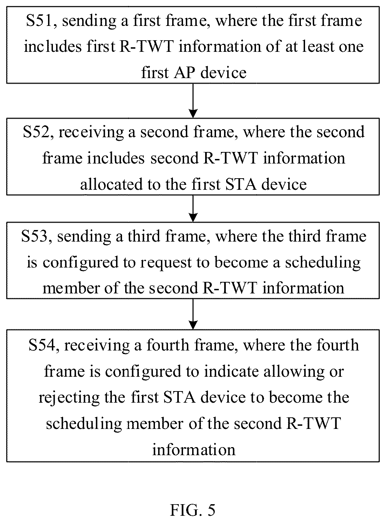

FIG. 5 is one flow schematic diagram of a communication method according to embodiments of the present disclosure.

As shown in FIG. 5, the above method may be applied to a first STA device, and the method includes:
Step S51, a first frame is sent, where the first frame includes first R-TWT information of at least one first AP device.

In the embodiments of the present disclosure, the first STA device is located within an overlapping basic service set (OBSS) formed by a BSS of the second AP device and a BSS of at least one first AP device.

The first STA device sends the first frame to the second AP device, and the second AP device is an AP device with which the first STA device expects to establish association and perform communication.

In the embodiments of the present disclosure, the first frame may be an association request frame or a re-association request frame.

In the embodiments of the present disclosure, the first frame includes first R-TWT information of at least one first AP device.

the first STA device may obtain the R-TWT information of the first AP device through a broadcast frame (such as a beacon frame) sent by each first AP device.

the first R-TWT information included in the first frame is R-TWT information of an AP device that forms an OBSS with the second AP device.

In the embodiments of the present disclosure, the BSS of the first AP device and the BSS of the second AP device form an overlapping basic service set (OBSS), and the first STA device is located within the OBSS.

As an example, in a case where the first STA device is located within an OBSS formed by the second AP device and at least one first AP device, when the first STA device expects to establish association with the second AP device, the first STA device may determine an association request frame, and the association request frame is configured to request to establish association with the second AP device. The association request frame includes first R-TWT information of at least one other AP device (first AP device), other than the second AP device, received by the first STA device.

As an example, in a case where the first STA device is located within an OBSS formed by the second AP device and at least one first AP device, when the first STA device expects to reestablish association with the second AP device, the first STA device may determine a re-association request frame, and the re-association request frame is configured to request to reestablish association with the second AP device. The re-association request frame includes first R-TWT information of at least one other AP device (first AP device), other than the second AP device, received by the first STA device.

In the embodiments of the present disclosure, the first frame includes a basic service set identifier present (BSSID Present) indication bit, and when an indication value of the basic service set identifier present indication bit is a first value, the indication bit is configured to indicate that the first frame includes first R-TWT information of at least one first AP device.

When the indication value of the basic service set identifier present indication bit is the first value, it indicates that there exists at least one first AP device whose BSS forms an OBSS with the BSS of the second AP device, and that the first STA device is located within the OBSS.

The first value may be 1, or may be another value, which is not limited herein.

In a case where the first STA device does not receive the first R-TWT information of another AP device (the first AP device) before determining the first frame, an indication value of the basic service set identifier present indication bit of the first frame is a value other than the first value (for example, 0) or is empty, which is configured to indicate that the first frame does not include first R-TWT information of the first AP device.

Optionally, the first frame includes a Control field (Control Subfield), and the control field includes the basic service set identifier present indication bit.

As an example, a specific format of the control field may be as follows:

| | NDP Paging Indicator | Responder PM Mode | Negotiation Type | TWT Information Frame Disabled | Wake Duration Unit | BSSID Present | Reserved |
|---|---|---|---|---|---|---|---|
| Bits: | 1 | 1 | 2 | 1 | 1 | 1 | 1 |

where a BSSID Present field is the basic service set identifier present indication bit.

Optionally, the first frame includes a target wake time element (TWT element) field, the target wake time element field includes the control subfield, and the control subfield includes the basic service set identifier present indication bit.

In the embodiments of the present disclosure, the first frame includes at least one broadcast target wake time parameter set (Broadcast TWT Parameter Set) field, and each broadcast target wake time parameter set field includes a basic service set identifier (BSSID) field, and the basic service set identifier field is configured to indicate a BSS corresponding to one first AP device.

Optionally, the basic service set identifier field in each broadcast target wake time parameter set field may include identifier information of the BSS corresponding to the first AP device, such as a BSSID, and the like.

Optionally, the basic service set identifier field in each broadcast target wake time parameter set field may include a MAC address of the first AP device, a device identifier, and other related information that may be used to uniquely identify the first AP device, so as to indirectly indicate the BSS corresponding to the first AP device.

In the embodiments of the present disclosure, the first frame includes a target wake time parameter information (TWT Parameter Information) field, and the target wake time parameter information field includes at least one broadcast target wake time parameter set (Broadcast TWT Parameter Set) field.

Optionally, the first frame includes a target wake time element (TWT element) field and a target wake time parameter information (TWT Parameter Information) field, and the target wake time parameter information field includes at least one broadcast target wake time parameter set (Broadcast TWT Parameter Set) field.

Optionally, each broadcast target wake time parameter set field further includes first R-TWT information of one first AP device.

Each broadcast target wake time parameter set field may further indicate, through the basic service set identifier field, that the first R-TWT information included in the broadcast target wake time parameter set field is first R-TWT information corresponding to the BSS indicated by the basic service set identifier field.

Optionally, any R-TWT information includes at least one of a start time, a service duration, or a service interval.

As an example, a specific format of the broadcast target wake time parameter set field may be as follows:

| | Request Type | Target Wake Time | Nominal Minimum TWT Wake Duration | TWT Wake Interval Mantissa | Broadcast TWT Info | Restricted TWT Traffic Info (optional) | BSSID |
|---|---|---|---|---|---|---|---|
| Octets | 2 | 2 | 1 | 2 | 2 | 0 or 3 | 6 |

The broadcast target wake time parameter set field may include a request type field, a target wake time field, a nominal minimum TWT wake duration field, a TWT wake interval mantissa field, a broadcast TWT information (Broadcast TWT Info) field, and a restricted target wake time traffic information (Restricted TWT Traffic Info) field. The Target Wake Time field is configured to indicate a start time of corresponding R-TWT information; the Nominal Minimum TWT Wake Duration field is configured to indicate a service lasting time of the corresponding R-TWT information, that is, a service duration; and the TWT Wake Interval Mantissa field is configured to indicate a service interval of the corresponding R-TWT information.

In the embodiments of the present disclosure, after determining the first frame, the first STA device may send the first frame to the second AP device.

Step S52, a second frame is received, where the second frame includes second R-TWT information allocated to the first STA device.

In the embodiments of the present disclosure, after the first STA device sends the first frame to the second AP device, the first STA device may receive the second frame sent by the second AP device.

The second frame includes second R-TWT information allocated to the first STA device by the second AP device.

Optionally, the second frame includes second R-TWT information allocated to the first STA device by the second AP device, and at least one first R-TWT information.

That is, in addition to including the second R-TWT information allocated to the first STA device by the second AP device, the second frame further includes first R-TWT information of at least one first AP device reported by the first STA device.

Optionally, the second frame may further include R-TWT information of another AP device received by the second AP device from another AP device.

As an example, the second frame includes second R-TWT information of the second AP device, and the R-TWT information of an AP device corresponding to another BSS that forms an OBSS with the BSS of the second AP device.

A service period of the second R-TWT information does not overlap with a service period of each first R-TWT information.

In the embodiments of the present disclosure, the second frame may be an association response frame, a re-association response (Reassociation Response) frame, or a beacon frame.

In the embodiments of the present disclosure, the second frame includes a target wake time parameter information (TWT Parameter Information) field, and the target wake time parameter information field includes at least one broadcast target wake time parameter set (Broadcast TWT Parameter Set) field, and each broadcast target wake time parameter set field includes second R-TWT information or R-TWT information of another AP device.

Optionally, the second frame includes a target wake time element (TWT element) field and a target wake time parameter information (TWT Parameter Information) field, and the target wake time parameter information field includes a broadcast target wake time parameter set (Broadcast TWT Parameter Set) field, and each broadcast target wake time parameter set field includes second R-TWT information or R-TWT information of another AP device.

Step S53, a third frame is sent, where the third frame is configured to request to become a scheduling member of the second R-TWT information.

In the embodiments of the present disclosure, after receiving the second frame, the first STA device may determine the third frame and send the third frame to the second AP device.

For example, after the first STA device establishes association or reestablishes association with the second AP device, the first STA device may determine the third frame and send the third frame to the second AP device.

The third frame is configured to request to become the scheduling member of the second R-TWT information, that is, is configured to request to perform low-latency service transmission with the second AP device within a service period of the second R-TWT information of the second AP device.

In the embodiments of the present disclosure, the third frame is a target wake time setup (TWT Setup) frame.

The third frame includes a first indication field, and an indication value of the first indication field is a second value, and is used to indicate that the third frame is configured to perform a TWT setup request, that is, is configured to indicate requesting to become the scheduling member of the second R-TWT information of the second AP device.

The first indication field may be a target wake time request (TWT Request) field in the third frame, or may be another information field in the third frame or at least one reserved bit, which is not limited herein.

The second value may be 1, which is not limited herein.

Step S54, a fourth frame is received, where the fourth frame is configured to indicate allowing or rejecting the first STA device to become the scheduling member of the second R-TWT information.

In the embodiments of the present disclosure, after the first STA device sends the third frame to the second AP device, the first STA device may receive the fourth frame sent by the second AP device.

The fourth frame is configured to respond to the third frame.

The fourth frame is configured to indicate allowing or rejecting the first STA device to become the scheduling member of the second R-TWT information, that is, is configured to indicate allowing or rejecting the first STA device to join the second R-TWT information, so as to perform the low-latency service transmission with the second AP device within the service period of the second R-TWT information.

In the embodiments of the present disclosure, the fourth frame is a target wake time setup frame.

The fourth frame includes a first indication field, and an indication value of the first indication field is a third value, and is configured to indicate that the fourth frame is configured to respond to the third frame, that is, to respond to a joining request of the first STA device.

The first indication field may be a target wake time request (TWT Request) field in the fourth frame, or may be another information field in the third frame or at least one reserved bit, which is not limited herein.

The third value is different from the second value, for example, the third value may be 0, which is not limited herein.

In the embodiments of the present disclosure, after the first STA device becomes the scheduling member of the second R-TWT information, the first STA device may perform the low-latency service transmission with the second AP device within the service period of the second R-TWT information.

The communication method involved in the embodiments of the present disclosure may include the foregoing steps and at least one of the embodiments. For example, any one of steps S51 to S54 may be implemented as an independent embodiment, and any combination of steps S51 to S54 may be implemented as an independent embodiment, but is not limited thereto.

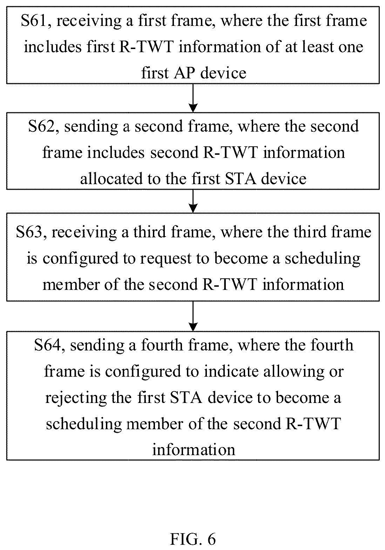

FIG. 6 is a second schematic flowchart of a communication method illustrated according to embodiments of the present disclosure.

As shown in FIG. 6, the above method may be applied to a second AP device, and the above method includes:
Step S61, a first frame is received, where the first frame includes first R-TWT information of at least one first AP device.

In the embodiments of the present disclosure, the second AP device receives the first frame sent by the first STA device.

The first STA device is located within an overlapping basic service set (OBSS) formed by a BSS of the second AP device and a BSS of at least one first AP device. The second AP device is an AP device with which the first STA device expects to establish association and perform communication.

In the embodiments of the present disclosure, the first frame may be an association request frame or a re-association request frame.

In the embodiments of the present disclosure, the first frame includes first R-TWT information of at least one first AP device.

The first R-TWT information included in the first frame is R-TWT information of an AP device that forms an OBSS with the second AP device.

In the embodiments of the present disclosure, the BSS of the first AP device and the BSS of the second AP device form an overlapping basic service set (OBSS), and the first STA device is located within the OBSS.

In the embodiments of the present disclosure, the first frame includes a basic service set identifier present (BSSID Present) indication bit, and when an indication value of the basic service set identifier present indication bit is a first value, the indication bit is configured to indicate that the first frame includes first R-TWT information of at least one first AP device.

When the indication value of the basic service set identifier present indication bit is the first value, it indicates that there exists at least one first AP device whose BSS forms an OBSS with the BSS of the second AP device, and that the first STA device is located within the OBSS.

The first value may be 1, or may be another value, which is not limited herein.

The indication value of the basic service set identifier present indication bit of the first frame is a value other than the first value (for example, 0) or is empty, which is configured to indicate that the first frame does not include first R-TWT information of the first AP device.

Optionally, the first frame includes a Control field (Control Subfield), and the control field includes the basic service set identifier present indication bit.

As an example, a specific format of the control field may be as follows:

| | NDP Paging Indicator | Responder PM Mode | Negotiation Type | TWT Information Frame Disabled | Wake Duration Unit | BSSID Present | Reserved |
|---|---|---|---|---|---|---|---|
| Bits: | 1 | 1 | 2 | 1 | 1 | 1 | 1 |

where a BSSID Present field is the basic service set identifier present indication bit.

Optionally, the first frame includes a target wake time element (TWT element) field, the target wake time element field includes the control subfield, and the control subfield includes the basic service set identifier present indication bit.

In the embodiments of the present disclosure, the first frame includes at least one broadcast target wake time parameter set (Broadcast TWT Parameter Set) field, and each broadcast target wake time parameter set field includes a basic service set identifier (BSSID) field, and the basic service set identifier field is configured to indicate a BSS corresponding to one first AP device.

Optionally, the basic service set identifier field in each broadcast target wake time parameter set field may include identifier information of the BSS corresponding to the first AP device, such as a BSSID, and the like.

Optionally, the basic service set identifier field in each broadcast target wake time parameter set field may include a MAC address of the first AP device, a device identifier, and other related information that may be used to uniquely identify the first AP device, so as to indirectly indicate the BSS corresponding to the first AP device.

In the embodiments of the present disclosure, the first frame includes a target wake time parameter information (TWT Parameter Information) field, and the target wake time parameter information field includes at least one broadcast target wake time parameter set (Broadcast TWT Parameter Set) field.

Optionally, the first frame includes a target wake time element (TWT element) field and a target wake time parameter information (TWT Parameter Information) field, and the target wake time parameter information field includes at least one broadcast target wake time parameter set (Broadcast TWT Parameter Set) field.

Optionally, each broadcast target wake time parameter set field further includes first R-TWT information of one first AP device.

Each broadcast target wake time parameter set field may further indicate, through the basic service set identifier field, that the first R-TWT information included in the broadcast target wake time parameter set field is first R-TWT information corresponding to the BSS indicated by the basic service set identifier field.

Optionally, any R-TWT information includes at least one of a start time, a service duration, or a service interval.

As an example, a specific format of the broadcast target wake time parameter set field may be as follows:

| | Request Type | Target Wake Time | Nominal Minimum TWT Wake Duration | TWT Wake Interval Mantissa | Broadcast TWT Info | Restricted TWT Traffic Info (optional) | BSSID |
|---|---|---|---|---|---|---|---|
| Octets | 2 | 2 | 1 | 2 | 2 | 0 or 3 | 6 |

The broadcast target wake time parameter set field may include a request type field, a target wake time field, a nominal minimum TWT wake duration field, a TWT wake interval mantissa field, a broadcast TWT information (Broadcast TWT Info) field, and a restricted target wake time traffic information (Restricted TWT Traffic Info) field. The Target Wake Time field is configured to indicate a start time of corresponding R-TWT information; the Nominal Minimum TWT Wake Duration field is configured to indicate a service lasting time of the corresponding R-TWT information, that is, a service duration; and the TWT Wake Interval Mantissa field is configured to indicate a service interval of the corresponding R-TWT information.

Step S62, a second frame is sent, where the second frame includes second R-TWT information allocated to the first STA device.

In the embodiments of the present disclosure, the second frame includes second R-TWT information allocated to the first STA device by the second AP device.

Optionally, the second frame includes second R-TWT information allocated to the first STA device by the second AP device, and at least one first R-TWT information.

That is, in addition to including the second R-TWT information allocated to the first STA device by the second AP device, the second frame further includes first R-TWT information of at least one first AP device reported by the first STA device.

Optionally, the second frame may further include R-TWT information of another AP device received by the second AP device from another AP device.

As an example, the second frame includes second R-TWT information of the second AP device, and the R-TWT information of an AP device corresponding to another BSS that forms an OBSS with the BSS of the second AP device.

In the embodiments of the present disclosure, after receiving the first frame sent by the first STA device, the second AP device may determine a basic service set identifier present indication bit in the first frame.

When an indication value of the basic service set identifier present indication bit in the first frame is the first value, that is, when the basic service set identifier present indication bit is configured to indicate that the first frame includes first R-TWT information of at least one first AP device, the second AP device may determine that the first STA device obtains the first R-TWT information from at least one first AP device, and may also determine that the first STA device is located within the OBSS formed by the BSS of the second AP device and the BSS of at least one first AP device, and the second AP device may obtain first R-TWT information of each first AP device from the first frame.

When an indication value of the basic service set identifier present indication bit in the first frame is not the first value, the second AP device may determine that the first STA device does not obtain first R-TWT information from another first AP device.

Optionally, in a case where the first frame includes at least one broadcast target wake time parameter set field, and each broadcast target wake time parameter set field indicates a BSS corresponding to a first AP device through a basic service set identifier, the second AP device may obtain the corresponding first R-TWT information from the corresponding first AP device.

Optionally, the second AP device may obtain first R-TWT information of each first AP device from each broadcast target wake time parameter set field in the first frame.

In the embodiments of the present disclosure, after receiving the first frame, the second AP device may determine second R-TWT information allocated to the first STA device according to the first frame.

When the second AP device determines that the first STA device does not obtain the first R-TWT information from another first AP device, the second AP device may determine original R-TWT information as second R-TWT information allocated to the first STA device.

When the second AP device determines that the first STA device obtains the first R-TWT information of at least one first AP device from another first AP device, the second AP device may determine second R-TWT information allocated to the first STA device based on first R-TWT information of each first AP device.

A service period of the second R-TWT information does not overlap with a service period of each first R-TWT information.

Optionally, when the second AP device determines that the first STA device obtains the first R-TWT information of at least one first AP device from another first AP device, the second AP device may adjust the original R-TWT information by using one or more of the following manner: shortening or extending a service period, changing a start time, shortening or extending a service interval, and the like, so as to obtain the second R-TWT information allocated to the first STA device.

The original R-TWT information of the second AP device is R-TWT information adopted by the second AP device before receiving the first frame.

In the embodiments of the present disclosure, the second frame may be an association response frame, a re-association response (Reassociation Response) frame, or a beacon frame.

In the embodiments of the present disclosure, the second frame includes a target wake time parameter information (TWT Parameter Information) field, and the target wake time parameter information field includes at least one broadcast target wake time parameter set (Broadcast TWT Parameter Set) field, and each broadcast target wake time parameter set field includes second R-TWT information or R-TWT information of another AP device.

Optionally, the second frame includes a target wake time element (TWT element) field and a target wake time parameter information (TWT Parameter Information) field, and the target wake time parameter information field includes a broadcast target wake time parameter set (Broadcast TWT Parameter Set) field, and each broadcast target wake time parameter set field includes second R-TWT information or R-TWT information of another AP device.

Step S63, a third frame is received, where the third frame is configured to request to become a scheduling member of the second R-TWT information.

In the embodiments of the present disclosure, after sending the second frame to the first STA device, the second AP device may receive the third frame sent by the first STA device.

For example, the third frame may be a frame sent by the first STA device after establishing association or reestablishing association with the second AP device, when the first STA device needs to join the second R-TWT information to perform the low-latency service transmission with the second AP device.

The third frame is configured to request to become the scheduling member of the second R-TWT information, that is, is configured to request to perform low-latency service transmission with the second AP device within a service period of the second R-TWT information of the second AP device.

In the embodiments of the present disclosure, the third frame is a target wake time setup (TWT Setup) frame.

The third frame includes a first indication field, and an indication value of the first indication field is a second value, and is used to indicate that the third frame is configured to perform a TWT setup request, that is, is configured to indicate requesting to become the scheduling member of the second R-TWT information of the second AP device.

The first indication field may be a target wake time request (TWT Request) field in the third frame, or may be another information field in the third frame or at least one reserved bit, which is not limited herein.

The second value may be 1, which is not limited herein.

Step S64, a fourth frame is sent, where the fourth frame is configured to indicate allowing or rejecting the first STA device to become the scheduling member of the second R-TWT information.

In the embodiments of the present disclosure, after receiving the third frame, the second AP device may determine and send the fourth frame to the first STA device, to respond to the third frame.

The fourth frame is configured to indicate allowing or rejecting the first STA device to become the scheduling member of the second R-TWT information, that is, is configured to indicate allowing or rejecting the first STA device to join the second R-TWT information, so as to perform the low-latency service transmission with the second AP device within the service period of the second R-TWT information.

In the embodiments of the present disclosure, the fourth frame is a target wake time setup frame.

The fourth frame includes a first indication field, and an indication value of the first indication field is a third value, and is configured to indicate that the fourth frame is configured to respond to the third frame, that is, to respond to a joining request of the first STA device.

The first indication field may be a target wake time request (TWT Request) field in the fourth frame, or may be another information field in the third frame or at least one reserved bit, which is not limited herein.

The third value is different from the second value, for example, the third value may be 0, which is not limited herein.

In the embodiments of the present disclosure, after the first STA device becomes the scheduling member of the second R-TWT information, the second AP device may perform the low-latency service transmission with the first STA device within the service period of the second R-TWT information.

The communication method involved in the embodiments of the present disclosure may include the foregoing steps and at least one of the embodiments. For example, any one of steps S61 to S64 may be implemented as an independent embodiment, and any combination of steps S61 to S64 may be implemented as an independent embodiment, but is not limited thereto.

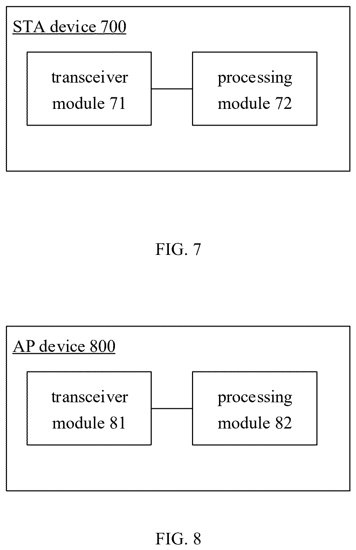

FIG. 7 is a schematic structural diagram of an STA device proposed in embodiments of the present disclosure. As shown in FIG. 7, the STA device 700 may include at least one of a processing module 71 and a transceiver module 72.

In some embodiments, the processing module 71 is configured to determine a first frame; and the transceiver module 72 is configured to send the first frame to a second AP device.

Optionally, the transceiver module 71 is configured to perform at least one of communication steps executed by the STA device in any of the above methods (for example, steps S41, steps S43 to S44, steps S51 to S54, but not limited thereto), which will not be repeated herein.

FIG. 8 is a schematic structural diagram of an AP device proposed in embodiments of the present disclosure. As shown in FIG. 8, the AP device 800 may include at least one of a processing module 81 and a transceiver module 82.

In some embodiments, the processing module 81 is configured to perform a step of determining second R-TWT information allocated to a first STA device; and the transceiver module 82 is configured to receive a first frame sent by the first STA device.

Optionally, the transceiver module 81 is configured to perform at least one of communication steps executed by the AP device in any of the above methods (for example, step S42, steps S61 to S64, but not limited thereto), which will not be repeated herein.

It should be understood that the division of the above units or modules is merely a division of logical functions. In actual implementation, all or part of the units or modules may be integrated into one physical entity, or may be physically separated. In addition, the units or modules may be implemented in a form in which a processor invokes software; for example, including a processor, where the processor is connected to a memory, the memory stores instructions, and the processor invokes the instructions stored in the memory to implement any of the above methods or to implement functions of the above units or modules, where the processor is, for example, a general-purpose processor, such as a central processing unit (CPU) or a microprocessor, and the memory is an internal or external memory of a device. Alternatively, the units or modules in the device may be implemented in a form of hardware circuits, and part or all of the functions of the units or modules may be implemented through design of hardware circuits. The above hardware circuits may be understood as one or more processors; for example, in one implementation, the above hardware circuits are application-specific integrated circuits (application-specific integrated circuit, ASICs), and part or all of the functions of the units or modules are implemented through design of logical relationships of components in the circuits; for another example, in another implementation, the above hardware circuits are implemented by programmable logic devices (PLD), for example, field programmable gate arrays (FPGA), which may include a large number of logic gate circuits, and connections between the logic gate circuits are configured through configuration files, thereby implementing part or all of the functions of the units or modules. All units or modules of the above device may be implemented entirely in a form in which a processor invokes software, or entirely in a form of hardware circuits, or partially in a form in which a processor invokes software and the remaining part in a form of hardware circuits.

In the embodiments of the present disclosure, a processor is a circuit having signal processing capability. In one implementation, the processor may be a circuit having instruction reading and execution capability, for example, a central processing unit (CPU), a microprocessor, a graphics processing unit (GPU) (which may be understood as a microprocessor), or a digital signal processor (DSP), and the like; in another implementation, the processor may implement certain functions through logical relationships of hardware circuits, and the logical relationships of the above hardware circuits are fixed or reconfigurable, for example, the processor is a hardware circuit implemented by an application-specific integrated circuit (ASIC) or a programmable logic device (PLD), such as an FPGA. In reconfigurable hardware circuits, a process in which the processor loads configuration documents to implement configuration of hardware circuits may be understood as a process in which the processor loads instructions to implement part or all of the functions of the above units or modules. In addition, the processor may further be hardware circuits designed for artificial intelligence, which may be understood as ASICs, such as a neural network processing unit (NPU), a tensor processing unit (TPU), a deep learning processing unit (DPU), and the like.

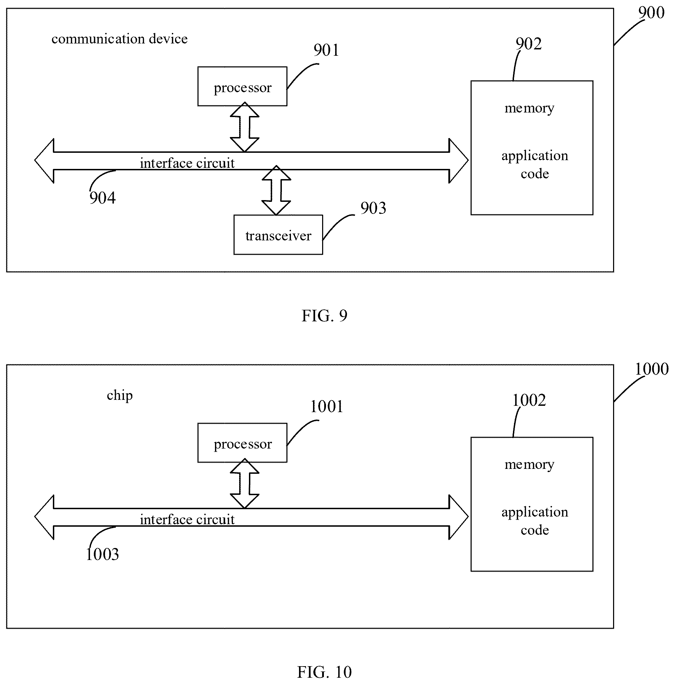

FIG. 9 is a schematic structural diagram of a communication device proposed in embodiments of the present disclosure. The communication device 900 may be an AP device or an STA device, or may be a chip, a chip system, or a processor that supports the STA device or the AP device to implement any of the above methods. The communication device may be used to implement the methods described in the above method embodiments, and reference may be made to the descriptions in the above method embodiments for details.

As shown in FIG. 9, the communication device 900 includes one or more processors 901. The processor 901 may be a general-purpose processor or a dedicated processor, for example, may be a baseband processor or a central processor. The baseband processor may be configured to process communication protocols and communication data, and the central processor may be configured to control the communication device (for example, a base station, a baseband chip, a terminal device, a terminal device chip, a DU or a CU, and the like), execute programs, and process data of the programs. The communication device 900 is configured to execute any one of the above methods.

In some embodiments, the communication device 900 further includes one or more memories 902 for storing instructions. Optionally, all or part of the memory 902 may also be located outside the communication device 900.

In some embodiments, the communication device 900 further includes one or more transceivers 903. When the communication device 900 includes one or more transceivers 903, the transceiver 903 executes at least one of communication steps such as sending and/or receiving in the above methods (for example, steps S41 to S44, steps S51 to S54, steps S61 to S64, but not limited thereto), and the processor 901 executes at least one of other steps (such as determining a first frame, determining second R-TWT information, but not limited thereto).

In some embodiments, the transceiver may include a receiver and/or a transmitter, and the receiver and the transmitter may be separated or may be integrated together. Optionally, terms such as transceiver, transceiving unit, transceiver apparatus, and transceiver circuit may be used interchangeably; terms such as transmitter, transmitting unit, transmitting apparatus, and transmitting circuit may be used interchangeably; and terms such as receiver, receiving unit, receiving apparatus, and receiving circuit may be used interchangeably.

In some embodiments, the communication device 900 may include one or more interface circuits 904. Optionally, the interface circuit 904 is connected to the memory 902, and the interface circuit 904 may be used to receive signals from the memory 902 or other devices, and may be used to send signals to the memory 902 or other devices. For example, the interface circuit 904 may read instructions stored in the memory 902 and send the instructions to the processor 901.

The communication device 900 in the above embodiment descriptions may be an AP device or an STA device; however, the scope of the communication device 900 described in the present disclosure is not limited thereto, and the structure of the communication device 900 is not limited by FIG. 9. The communication device may be an independent device or may be a part of a larger device. For example, the communication device may be: (1) an independent integrated circuit (IC), or a chip, or a chip system or subsystem; (2) a set including one or more ICs, and optionally, the above IC set may further include storage components for storing data and programs; (3) an ASIC, such as a modem; (4) a module that may be embedded in another device; (5) a receiver, a terminal device, an intelligent terminal device, a cellular phone, a wireless device, a handheld device, a mobile unit, a vehicle-mounted device, a network device, a cloud device, an artificial intelligence device, and the like; (6) others, and the like.

FIG. 10 is a schematic structural diagram of a chip 1000 proposed in embodiments of the present disclosure. The chip 1000 includes one or more processors 1001, and the chip 1000 is configured to execute any one of the above methods.

In some embodiments, the chip 1000 further includes one or more interface circuits 1003. Optionally, the interface circuit 1003 is connected to a memory 1002, and the interface circuit 1003 may be used to receive a signal from the memory 1002 or other devices, and the interface circuit 1003 may be used to send a signal to the memory 1002 or other devices. For example, the interface circuit 1003 may read instructions stored in the memory 1002 and send the instructions to the processor 1001.

In some embodiments, the interface circuit 1003 executes at least one of communication steps such as sending and/or receiving in the above methods (for example, steps S41 to S44, steps S51 to S54, steps S61 to S64, but not limited thereto), and the processor 1001 executes at least one of other steps (for example, determining a first frame, determining second R-TWT information, but not limited thereto).

In some embodiments, terms such as interface circuit, interface, transceiving pin, and transceiver may be used interchangeably.

In some embodiments, the chip 1000 further includes one or more memories 1002 for storing instructions. Optionally, all or part of the memory 1002 may be located outside the chip 1000.

The present disclosure further proposes a storage medium, where the storage medium stores instructions, and when the instructions are executed on the communication device 900, the communication device 900 is caused to execute any one of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory (non-transitory) storage medium, but is not limited thereto, and may also be a transitory storage medium.

The present disclosure further proposes a program product, and when the program product is executed by the communication device 900, the communication device 900 is caused to execute any one of the above methods. Optionally, the program product is a computer program product.

The present disclosure further proposes a computer program, and when the computer program is executed on a computer, the computer is caused to execute any one of the above methods. The above descriptions are merely preferred embodiments of the present disclosure and explanations of the technical principles applied. Those skilled in the art should understand that the scope of disclosure involved in the present disclosure is not limited to the technical solutions formed by specific combinations of the above technical features, and should also cover other technical solutions formed by arbitrary combinations of the above technical features or equivalent features thereof without departing from the above disclosed concept. For example, technical solutions formed by replacing the above features with technical features having similar functions disclosed in the present disclosure (but not limited thereto).

## Claims

1. A communication method, comprising:
determining, by a first station STA device, a first frame, wherein the first frame comprises first restricted target wake time R-TWT information of at least one first access point AP device;
sending, by the first STA device, the first frame to a second AP device;
wherein a basic service set BSS of the first AP device and a BSS of the second AP device form an overlapping basic service set OBSS, and the OBSS comprises the first STA device.

2. The method according to claim 1, wherein the first frame comprises a basic service set identifier present indication bit, and the basic service set identifier present indication bit indicates, by a first value, that the first frame comprises the first R-TWT information of the at least one first AP device.

3. The method according to claim 2, wherein the first frame comprises a target wake time element field, the target wake time element field comprises a control field, and the control field comprises the basic service set identifier present indication bit.

4. The method according to claim 1, wherein the first frame comprises at least one broadcast target wake time parameter set field, and each broadcast target wake time parameter set field indicates, through a basic service set identifier field, a BSS corresponding to one first AP device.

5. The method according to claim 4, wherein the first frame comprises a target wake time element field, the target wake time element field comprises a target wake time parameter information field, and the target wake time parameter information field comprises each of the broadcast target wake time parameter set field;
wherein each broadcast target wake time parameter set field further comprises one piece of first R-TWT information.

6. The method according to claim 1, further comprising:
receiving, by the first STA device, a second frame sent by the second AP device, wherein the second frame comprises at least one of:
second R-TWT information allocated by the second AP device; or
second R-TWT information allocated by the second AP device, and at least one first R-TWT information;
wherein a service period of the second R-TWT information does not overlap with a service period of each first R-TWT information.

7. The method according to claim 6, further comprising:
sending, by the first STA device, a third frame to the second AP device, wherein the third frame is configured to request to become a scheduling member of the second R-TWT information.

8. The method according to claim 7, further comprising:
receiving, by the first STA device, a fourth frame sent by the second AP device, wherein the fourth frame indicates allowing or rejecting the first STA device to become the scheduling member of the second R-TWT information.

9. The method according to claim 8, further comprising:
after the first STA device becomes the scheduling member of the second R-TWT information, performing, by the first STA device, low-latency service transmission with the second AP device within the service period of the second R-TWT information.

10. The method according to claim 6, wherein the first R-TWT information and the second R-TWT information comprise at least one of a start time, a service duration, or a service interval.

11. A communication method, comprising:
receiving, by a second AP device, a first frame sent by a first STA device, wherein each first frame comprises first R-TWT information of at least one first AP device;
wherein a basic service set BSS of the first AP device and a BSS of the second AP device form an overlapping basic service set OBSS, and the OBSS comprises the first STA device.

12. The method according to claim 11, wherein the first frame comprises a basic service set identifier present indication bit, the basic service set identifier present indication bit indicates, by a first value, that the first frame comprises the first R-TWT information of the at least one first AP device.

13. The method according to claim 12, wherein the first frame comprises a target wake time element field, the target wake time element field comprises a control field, and the control field comprises the basic service set identifier present indication bit.

14. The method according to claim 11, wherein the first frame comprises at least one broadcast target wake time parameter set field, and each broadcast target wake time parameter set field indicates, through a basic service set identifier field, a BSS corresponding to one first AP device.

15. The method according to claim 14, wherein the first frame comprises a target wake time element field, the target wake time element field comprises a target wake time parameter information field, and the target wake time parameter information field comprises each of the broadcast target wake time parameter set field;
wherein each broadcast target wake time parameter set field further comprises one piece of first R-TWT information.

16. The method according to claim 11, further comprising:
sending, by the second AP device, a second frame to the first STA device, wherein the second frame comprises at least one of:
second R-TWT information allocated to the first STA device; or
second R-TWT information allocated to the first STA device, and at least one first R-TWT information;
wherein a service period of the second R-TWT information does not overlap with a service period of each first R-TWT information.

17. The method according to claim 16, further comprising:
receiving, by the second AP device, a third frame sent by the first STA device, wherein the third frame is configured to request to become a scheduling member of the second R-TWT information.

18. The method according to claim 17, further comprising:
sending, by the second AP device, a fourth frame to the first STA device, wherein the fourth frame indicates allowing or rejecting the first STA device to become the scheduling member of the second R-TWT information.

19. The method according to claim 18, further comprising:
after the first STA device becomes the scheduling member of the second R-TWT information, performing, by the second AP device, low-latency service transmission with the first STA device within the service period of the second R-TWT information.

20. The method according to claim 16, wherein the first R-TWT information and the second R-TWT information comprise at least one of a start time, a service duration, or a service interval.

21. A STA device, comprising:
a processing module, configured to determine a first frame, wherein the first frame comprises first restricted target wake time R-TWT information of at least one first access point AP device;
a first transceiver module, configured to send the first frame to a second AP device;
wherein a basic service set BSS of the first AP device and a BSS of the second AP device form an overlapping basic service set OBSS, and the OBSS comprises the first STA device.

22. An AP device, comprising:
a second transceiver module, configured to receive a first frame sent by a first STA device, wherein each first frame comprises first R-TWT information of at least one first AP device;
wherein a basic service set BSS of the first AP device and a BSS of the second AP device form an overlapping basic service set OBSS, and the OBSS comprises the first STA device.

23. A STA device, comprising:
one or a plurality of processors;
wherein the STA device is configured to perform the communication method according to any one of claims 1-10.

24. An AP device, comprising:
one or a plurality of processors;
wherein the AP device is configured to perform the communication method according to any one of claims 11-20.

25. A communication system, comprising an AP device and a STA device, wherein the STA device is configured to implement the communication method according to any one of claims 1-10, and the AP device is configured to implement the communication method according to any one of claims 11-20.

26. A storage medium, storing instructions, wherein when the instructions are executed on a communication device, the communication device performs the communication method according to any one of claims 1-10 or 11-20.
